# EUROPEAN PATENT APPLICATION

(11) **EP 1 114 715 A1**
(43) Date of publication of application: **11.07.2001**
(21) Application number: 99919669.4
(22) Date of filing: 24.05.1999
(51) Int. Cl.: B29C 69/02, A47K 3/02, B29C 45/14, B29C 51/00

(54) **MOLDED PRODUCT OF SYNTHETIC RESIN AND METHOD OF MANUFACTURING THE SAME**

(30) Priority: 26.05.1998 JP 14414698; 29.01.1999 JP 2251299; 10.05.1999 JP 12905899
(71) Applicant: RP TOPLA LIMITED, Ibaraki-shi, Osaka 567-0005 (JP)
(72) Inventor: WATANABE, Mitsuo RP Topla Ltd., Kanto Ryumai Plant, Ohta-shi Gumma 373-0806 (JP); MINAMIMOTO, Toyoki RP Topla Ltd., Kanta Ryumai Pl., Ohta-shi Gumma 373-0806 (JP); OKADA, Masami RP Topla Limited, Kanto Ryumai Plant, Ohta-shi Gumma 373-0806 (JP); HATA, Yasuhiko RP Topla Limited, Tech. Dev. Center, Ohta-shi Gumma 373-0805 (JP); IIDA, Isao RP Topla Limited, Kanto Ryumai Plant, Ohta-shi Gumma 373-0806 (JP); FUJIWARA, Tsuyoshi RP Topla Ltd., Tech. Dev. Ctr., Ohta-shi Gunma 373-0806 (JP)
(74) Representative: DIEHL GLAESER HILTL & PARTNER
(86) International application number: JP9902716
(87) International publication number: WO9961223

(57) **Abstract**

A method of manufacturing a molded product of a synthetic resin, characterized by comprising the steps of forming a container and a panel type surface layer member by subjecting a synthetic resin sheet to two-stage thermoforming; and forming an outer shell reinforcing layer on a rear surface of the surface layer member by subjecting a glass fiber-reinforced or non-glass-fiber-reinforced ABS resin or AS resin to injection molding, the method being capable of manufacturing molded products, such as a container and panels of a synthetic resin which have a strength and a rigidity high enough to withstand severe thermal resistance tests, a high quality and light weight, and which are capable of being obtained at a low cost and recycled easily.

## Description

### TECHNICAL FIELD

This invention relates to synthetic resin molded articles and processes for producing the same. More particularly, this invention concerns processes for producing synthetic resin containers and panels which can easily produce synthetic resin containers such as a basin, a sink for wash rooms or kitchens and a bathtub or panels such as a counter and an apron for wash rooms or bathtubs, a wall panel and a partitioning panel. Alternatively, more particularly, this invention is. related to a process for reproducing a bathtub and to a bathtub produced by this process.

### BACKGROUND ART

Hitherto, as synthetic resin molded articles, for example, as bathtubs and washing counters, there have been known a container made of unsaturated polyester reinforced with glass fibers, the inner surface of the container being smoothed by laying a gel coat layer, and one which is produced by compression molding using a raw material prepared by making a mat from glass fibers, allowing the mat to be impregnated with polyester resin, and forming the mat into a board, and the like. However, in the case of bathtubs in which hot water is continuously used, a bathtub is hydrolyzed by water, and when a few years have passed from the start to use the bathtub, the glass fibers present on the load line are exposed and the part of the load line becomes rough. When dirt sticks to the load line part which has become rough, the dirt becomes difficult to be removed.

As another conventional bathtub or washing counter, one which is produced by thermoforming an acrylic resin board and spraying an unsaturated polyester resin with glass fibers from the rear side and hardening it or one which is produced by lining a mat or a cloth of glass fibers with an unsaturated polyester resin liquid and hardening it. However, these products have unstable qualities because when a processing technique is not perfect, the products may involve air which expands to cause blisters when they are used. In addition, the products are produced by handwork. It, therefore, is difficult to produce these products in quantity. Furthermore, repetition of a tough high temperature - cooling test tends to cause various phenomena such as cracking because of a large difference in coefficient of linear expansion between an acrylic resin and a glass fiber reinforced unsaturated polyester.

As a technique for solving these drawbacks, synthetic resin containers, the containers being composed of a container-shaped inner surface layer member prepared by thermoforming of a synthetic resin sheet and an outer reinforcing shell layer provided on the rear surface of the inner surface layer member by injection molding of a thermoplastic resin, has been proposed in Japanese Unexamined Patent Publication No. 90688/1996 and Japanese Unexamined Patent Publication No. 225955/1998. These containers have no hydrolysis problems and are less affected by human factors. They, therefore, have advantages, for example, that they have no quality problems and that they can be produced in high mass-productivity and have good recyclability.

However, the outer reinforcing shell layer formed by injection molding contains short glass fibers. Therefore, even if a thermoplastic resin reinforced with glass fibers is used, there is necessity of making the outer reinforcing shell layer thicker than that in a conventional container or increasing the amount of the glass fibers in order to make the outer reinforcing layer have a rigidity lower than that of a layer formed of a mixture of unsaturated polyester and glass fibers and to enable the outer reinforcing shell layer to endure a tough heat resistance test. As a result, containers and panels necessarily have heavy weight, and therefore, their transportability and workability in the time when they are mounted are seriously reduced. On the other hand, in order to attain a large reduction in cost, there are necessity, for example, of making a thermoforming product using a thinner synthetic resin sheet and decreasing the thickness of the outer reinforcing shell layer. For such purposes, a thermoforming technique which enable molded articles to have a small distribution in thickness is required. The thermoplastic resin used for the outer reinforcing shell layer also is required to have a material composition which has a high rigidity at a high temperature. Furthermore, in the case of the containers, such as bathtubs, which have level adjusting legs, it is desirable that such accessory legs or bosses are formed integrally at the time when the outer reinforcing shell layer is formed by injection molding. The technique disclosed in Japanese Unexamined Patent Publication No. 90688/1996 and Japanese Unexamined Patent Publication No. 225955/1998, however, can not satisfy these requirements.

Furthermore, conventional bathtubs are produced by (I) a step of heating and softening an acrylic resin sheet, (II) a step of forming the sheet into a shape of the desired bathtub by vacuum forming, (III) a step of lining the shaped sheet with an unsaturated polyester reinforced with glass fibers (henceforth, referred merely to as "FRP"), and (IV) a step of smoothing the FRP layer with degassing and subsequently hardening it (the prior technique 1).

The prior technique 1, however, has problems that glass fibers stick to the skin of workers and the workers inhale scattered glass fibers in the step (III).

Furthermore, the prior technique 1 has another problem that the bathtub produced by this technique can not be recycled directly because the FRP which is used as a reinforcing material uses a thermosetting resin as a raw material.

The forgoing Japanese Unexamined Patent Publication No. 90688/1996 discloses, as a bathtub solving the problems of the prior technique 1, a bathtub in which an outer reinforcing shell layer formed of a thermoplastic resin foam is provided on the outer surface of an inner surface layer prepared by forming an acrylic resin sheet (the prior technique 2).

Although an embodiment of the prior technique 2 describes that the thermoplastic resin foam is a glass fiber reinforced resin foam, no concrete method for recycling a bathtub in which such a glass fiber reinforced resin foam is adopted for its outer reinforcing shell layer is referred to.

An object of the present invention is to solve such known problems and to provide a process for producing molded articles, such as synthetic resin containers and panels, the molded article having strength and rigidity sufficient to endure a tough heat resistance test and being of high quality, light weight and low cost.

The other object of the present invention is to provide a process for producing a thermoplastic resin molded article which is applicable to a reproducing process of an acrylic bathtub which can be reused as a raw material.

### DISCLOSURE OF INVENTION

The fundamental of the process for producing a synthetic resin molded article according to the present invention is characterized by being a process for producing a container and a panel formed of synthetic resin, the container and the panel being composed of a surface layer member prepared by two-step thermoforming of a synthetic resin sheet and an outer reinforcing shell layer provided to the rear surface of the surface layer member by injection molding of a thermoplastic resin (ABS resin or AS resin which is or is not reinforced with glass fibers). The first embodiment of the process of the present invention is characterized in that the first thermoforming of the surface layer member has a step of clamping the synthetic resin sheet with a clamping unit, a step of heating and softening the synthetic resin sheet followed by moving and spreading the clamping unit in the direction in which the sheet is spread, a step of moving the spread clamping unit in the direction in which the unit is closed with lowering a plug for thermoforming partway and a step of pushing up a thermoforming mold to form the surface layer member into the shapes of a container and a panel, and in that a surface layer member with a uniform thickness can be obtained using a thin synthetic resin sheet.

The second embodiment of the present invention is directed to the outer reinforcing shell layer is designed to be an outer reinforcing shell layer with strength sufficient to endure a tough heat resistance test even if the layer is thin. This embodiment is characterized concretely in that a thermoplastic resin for forming the outer reinforcing shell layer (for example, ABS resin and AS resin) can be reinforced with glass fibers longer than those in products obtained by conventional injection molding by means of weighing and mixing a single or a plurality of thermoplastic resin which will constitute a resin composition and a masterbatch of long glass fiber in a predetermined proportion followed by melt kneading them in an injection molding machine and directly injection molding the resulting mixture, and as a result, the outer reinforcing shell layer of excellent strength. In addition, when a thickness of the outer reinforcing shell layer is set to be thin, fluidity of a molten resin during injection molding becomes lower and injection moldability is deteriorated. Accordingly, this embodiment is characterized in that a sufficient fluidity can be ensured even if the outer reinforcing shell layer is set to be thin and a thin outer reinforcing shell layer with excellent strength can be obtained by placing the preceding surface layer member on a injection molding mold, subsequently closing the mold with keeping a state where the mold is slightly open, injection molding a molten thermoplastic resin which will become the outer reinforcing shell layer, and then compressing the mold until it is closed completely.

In the third embodiment of the present invention, the preceding surface layer member prepared by thermoforming is placed on the male die of an injection molding mold, and then a molten thermoplastic resin is injection molded into the cavity lying between the surface layer member and the male die of the mold. The surface layer member is softened and simultaneously thermoformed again along the male die of the mold by the temperature and the injection secondary pressure of the thermoplastic resin. This embodiment is characterized in that a container and a panel of synthetic resin which are of high quality and have no wrinkles and no cracks can be obtained by tightly closing a gap created because of the difference in dimensional accuracy between the vacuum molded surface layer member and the male die machined with very high precision by means of providing a vacuum path in the male die of the mold, placing the surface layer member on the male die and subsequently evacuating the mold, and then injection molding the molten thermoplastic resin. In addition, this embodiment is characterized in that a container and a panel of synthetic resin having a sharp shape and have a skid which can exhibit an excellent skidding effect can be obtained by providing, to the male die of the mold, an uneven shape of a skid which will be provided to a bottom and an armrest of a container such as a bathtub.

The fourth embodiment of the present invention is directed to a process for producing a container and a panel of synthetic resin having a thick part such as a level adjusting leg and a reinforcing rib. This embodiment is characterized in that accessory parts and reinforcing members can be formed integrally without forming a sink mark in the surface of the thick part such as the leg and the rib and a high quality container and panel which are thin but rigid can be obtained by injecting a molten thermoplastic resin for forming the preceding outer reinforcing shell layer, and subsequently supplying an inert gas under pressure between the cavity of the injection molding mold and the thermoplastic resin from the rear side of the molded article only in the thick part such as the leg or the rib, and pressuring and cooling.

Additionally, this embodiment is characterized in that accessory parts and reinforcing members can be formed integrally without forming a sink mark in the surface of the thick part such as the leg and the rib by using a expandable resin as a thermoplastic resin for forming the outer reinforcing shell layer and injecting (short shotting) the molten thermoplastic resin in an amount a little less than the volume of the cavity of the injection molding mold followed by expanding the resin. In this event, an expansion ratio is desirably set to less than 1.1 in view of strength of the molded article, ability of copying the mold shape, and the like.

The process for reproducing a bathtub which is the fifth embodiment of the process for producing a synthetic resin molded article is characterized by comprising:
(a) a step of removing metal fittings from an acrylic bathtub to be scrapped and cutting the bathtub into pieces of a predetermined size;
(b) a step of feeding the pieces to a crusher to grain both the acrylic resin layer and the thermoplastic resin layer containing reinforcing glass fibers which constitute the acrylic bathtub;
(c) a step of thermoforming an acrylic resin sheet first into a bathtub-shaped inner surface layer member;
(d) a step of opening an injection molding mold, inserting the inner surface layer member and closing the mold;
(e) a step of injecting a molten thermoplastic resin which is or is not reinforced with glass fibers from the second nozzle into a cavity lying between the inner surface layer member inserted to the injection molding mold and the female die;
(f) a step of heating and melting the mixture obtained in the preceding step (b) containing the grained acrylic resin and reinforcing glass fibers and injecting the mixture into the cavity through the first nozzle;
(g) a step of pressing the inner surface layer member firmly against the male die of the injection molding mold and remolding the inner surface layer member along the male die by softening the inner surface layer member by the injection temperature and injection secondary pressure of the thermoplastic resin and fully keeping the injection secondary pressure; and
(h) a step of fusing the inner surface layer member obtained in the step (c) and the outer reinforcing shell layer obtained in the steps (e) and (f).

An embodiment in which the acrylic resin sheet to be used in the step (c) is formed of poly(methyl methacrylate) and the thermoplastic resin to be used in the steps (e) and (f) is composed of ABS resin or AS resin which is or is not reinforced with glass fibers is preferred.

The bathtub which is the sixth embodiment of the synthetic resin molded article of the present invention is directed to one which comprises an inner surface layer and an outer reinforcing shell layer provided outside the inner surface layer, the outer reinforcing shell layer having a sandwich structure which is composed of skin layers and an intermediate layer. This bathtub is characterized in that the inner surface layer is formed of an acrylic resin, the skin layer is formed of a thermoplastic resin which is or is not reinforced with glass fibers, and the intermediate layer is formed of a mixture of an acrylic resin obtained by graining an acrylic bathtub from which metal fittings have been removed and which is to be scrapped and a thermoplastic resin containing glass fibers. A bathtub which is another embodiment is one which comprises an inner surface layer and an outer reinforcing shell layer provided outside the inner surface layer, the outer reinforcing shell layer having a two layered structure in which the first layer being in contact with the inner surface layer formed of an acrylic resin is formed of a thermoplastic resin which is or is not reinforced with glass fibers and the second layer of the outermost layer is formed of a mixture of an acrylic resin obtained by grinning an acrylic bathtub from which metal fittings have been removed and which is to be recycled and a thermoplastic resin containing glass fibers.

### BEST MODE FOR CARRYING OUT THE INVENTION

First, based on attached drawings, a container and a panel formed of synthetic resin are explained as examples of the synthetic resin molded article of the present invention. A process for producing them are also explained.

Figs. 1 to 7 are explanatory views illustrating concepts of fundamental steps according to the process of the present invention.

Figs. 8 to 11 are explanatory views illustrating an embodiment of vacuum forming steps according to the process of the present invention.

Figs. 12 to 15 are explanatory views illustrating an embodiment of injection molding steps according to the process of the present invention.

Figs. 16 to 22 are explanatory views illustrating another embodiment of injection molding steps according to the process of the present invention.

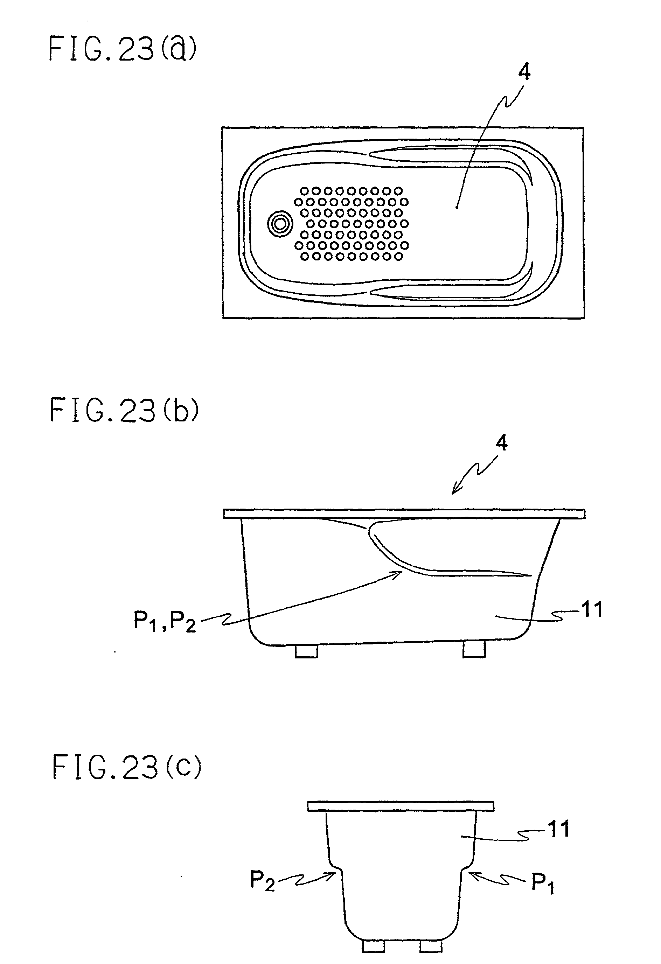

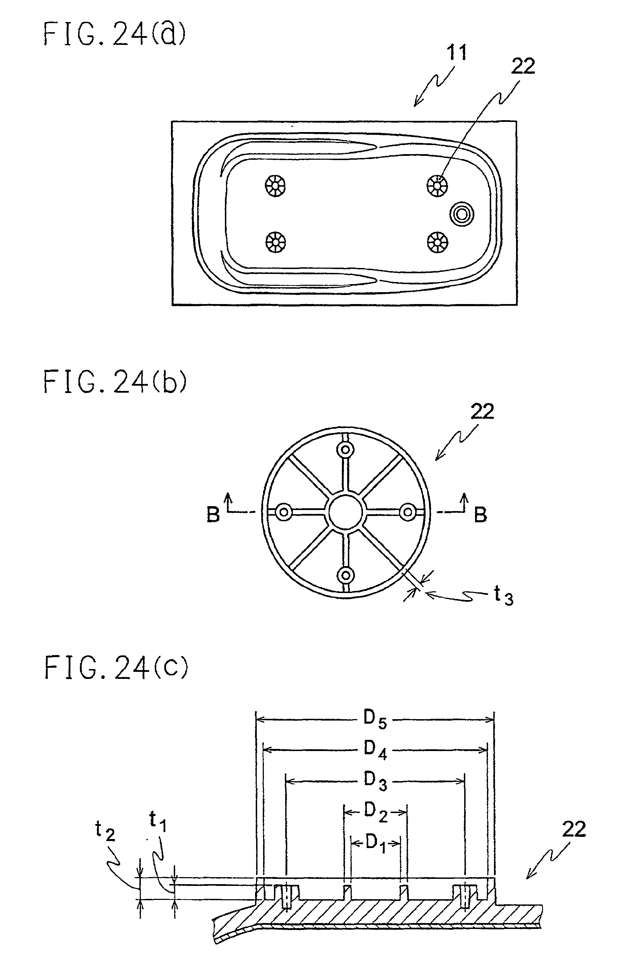

In addition, Fig. 23 is an explanatory view illustrating the points at which dimensional changes are measured in Example 3 of the present invention. Fig. 24 is an explanatory illustrating a shape of the level adjusting leg of Example 4.

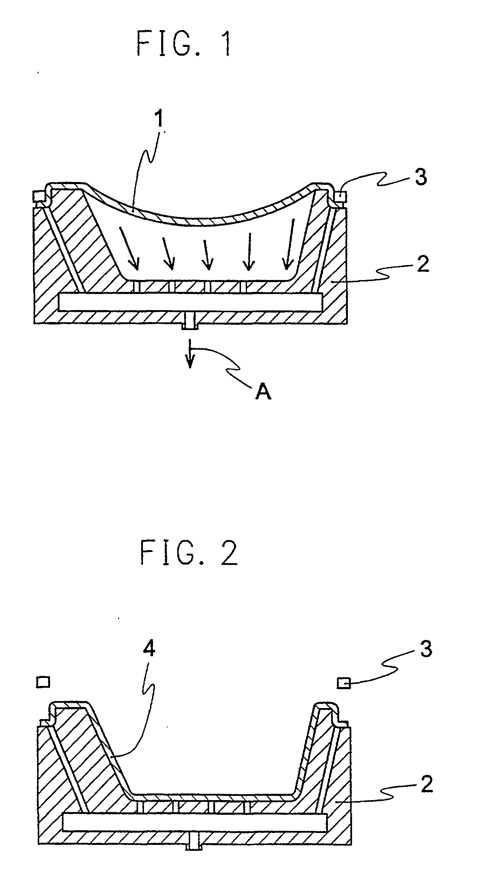

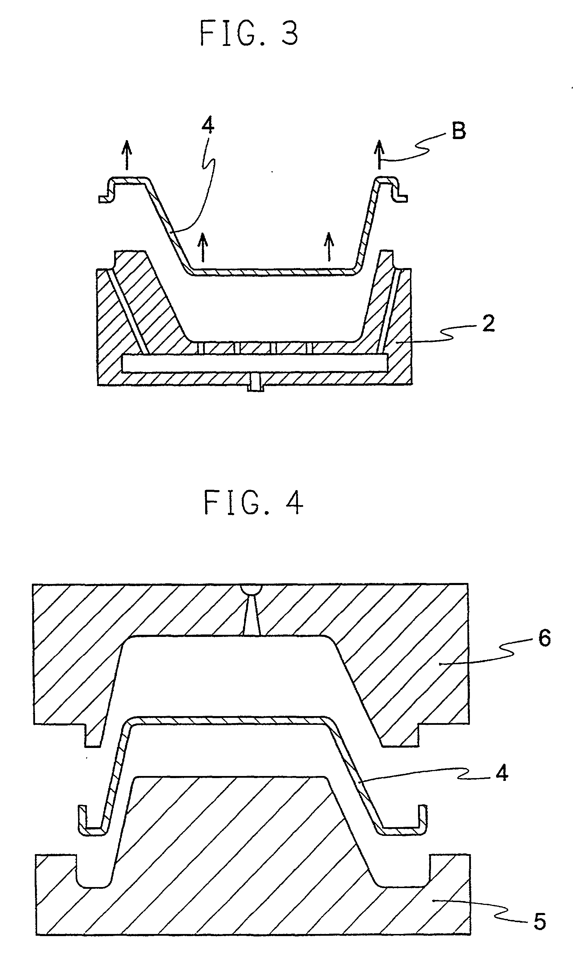

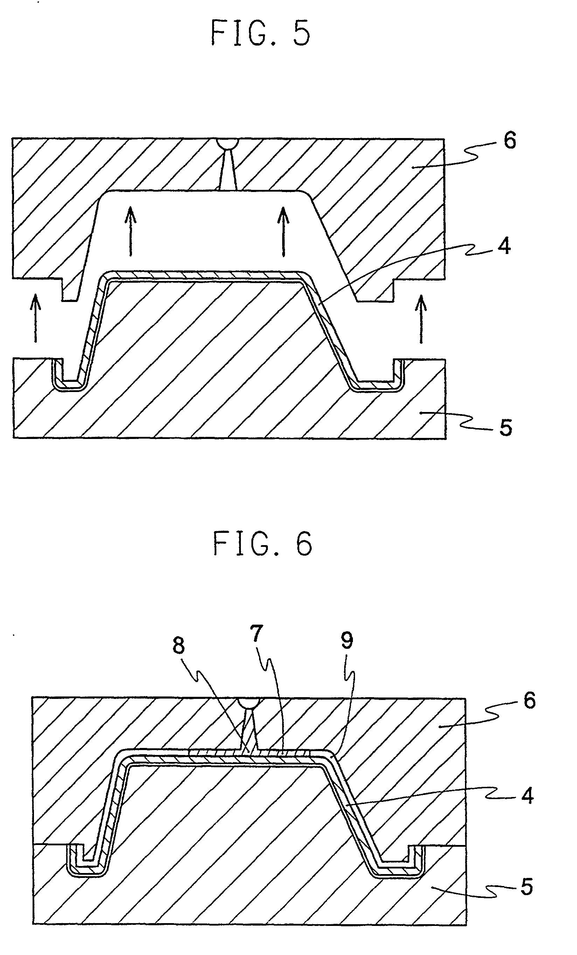

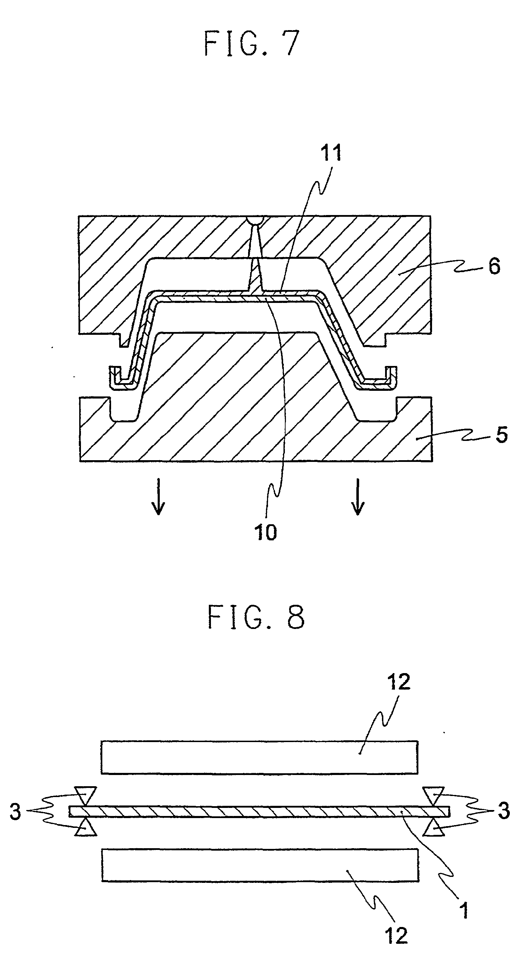

First, based on Fig. 1, the fundamental steps of the process of the present invention are described. The fundamental steps are broadly divided into vacuum forming steps illustrated in Figs. 1 to 4 and injection molding steps illustrated in Figs. 4 to 7. That is, an acrylic resin sheet 1 which is a synthetic resin sheet is fitted to a clamp 3 of a vacuum forming machine as shown in Fig. 1 and subsequently heated and softened. The acrylic resin sheet 1 is evacuated in the direction indicated by the arrow A using a vacuum forming mold 2 and cooled as shown in Figs. 2 and 3. After that, a roughly-molded surface layer member 4 with a container form is pulled out of the vacuum forming mold 2 in the direction indicated by the arrow B. Subsequently, the roughly-molded surface layer member 4 is put on the male die 5 of the injection molding mold as shown in Fig. 4. Next, the male die 5 is moved toward the female die 6 and the male and female dies are clamped. After the completion of this mold clamping, a thermoplastic resin 7 which is in a heated and molten state is injected into a cavity 9 lying between the roughly-molded surface layer member 4 and the female die 6 through a gate 8 as shown in Fig. 6. As a result, the roughly-molded surface layer member 4 is softened and pressed against the male die 5 and thermoformed again by the injection resin temperature and the injection pressure. Finally, an container in which a surface layer member 10 and an outer reinforcing shell member 11 are integrally molded can be obtained by releasing it from the mold as shown in Fig. 7.

### EMBODIMENT 1

The EMBODIMENT 1 of the present invention is related to a process using the preceding vacuum forming steps, and is explained based on Figs. 8 to 11.

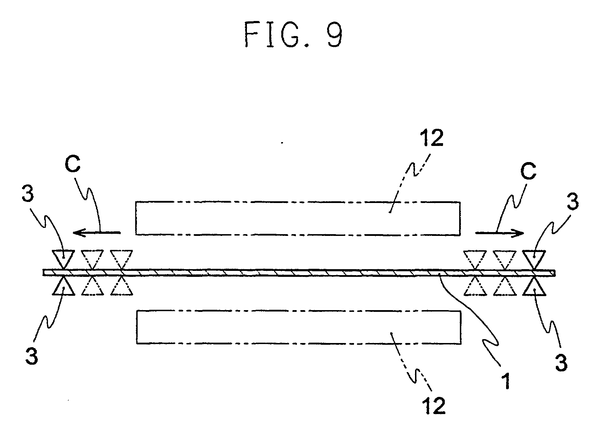

First, an acrylic resin sheet 1 is fitted to a clamp 3 of a vacuum forming machine. The acrylic resin sheet 1 is heated and softened at 160 to 200°C by a heater 12 of the vacuum forming machine, and then the clamp 3 is moved and spread in the direction indicated by the arrow C, that is, the direction in which the acrylic resin sheet 1 is spread as shown in Fig. 9. Subsequently, a forming plug 13 is lowered to an arbitrary position, and immediately, the clamp which was once spread is moved in the closing direction indicated by the arrow D. In the next step, the vacuum forming mold 2 is elevated to an arbitrary position and the acrylic resin sheet 1 is evacuated the direction indicated by the arrow A to be thermoformed into the shape of the roughly-molded surface layer member 4.

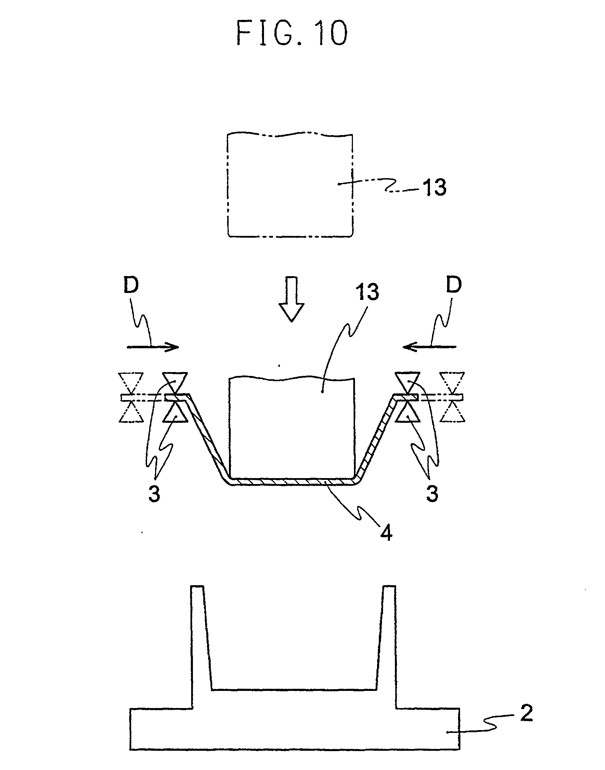

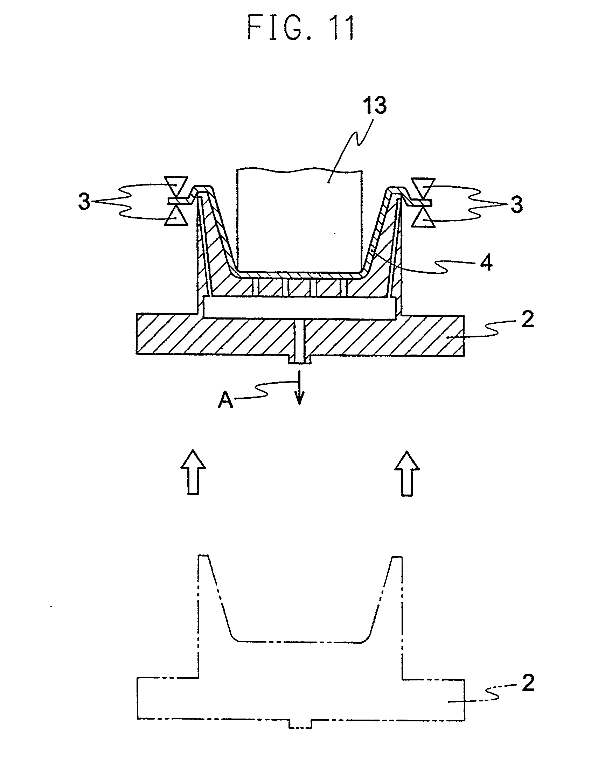

The acrylic resin sheet 1 to be used has no particular limitations in thickness. This invention, however, is characterized in that a thermoformed article with evener thickness distribution can be obtained using a thinner synthetic resin sheet and the acrylic resin sheet 1 preferably has a thickness of not more than 4 millimeter. The vacuum forming machine has two sets of clamp 3 wherein one set moves in the longitudinal direction and the other moves in the transversal direction. As for the clamp which is moved in the direction indicated by the arrow C, only one set of clamp selected from one moves in the longitudinal direction and one moves in the transversal direction may be moved, and alternatively, the both sets of clamp may be moved as long as the moving direction is a direction in which the acrylic resin sheet 1 is spread. The four types of operations shown in Figs. 10 and 11, namely, lowering the forming plug 13, moving the clamp 3 in the closing direction, elevating the vacuum forming mold 2, and evacuating in the direction indicated by the arrow A may be conducted either approximately simultaneously or in parallel with a slight delay. Operating timing, lowering and elevating height and the like may be adjusted arbitrarily depending upon the shape of the roughly-molded surface layer member 4.

### EXAMPLES

### EXAMPLE 1

Using a 3 millimeter thick acrylic resin sheet PX-200 (manufactured by Mitsubishi Rayon Co., Ltd.), a roughly-molded surface layer member with a bathtub form having dimensions 750 wide × 1,400 long × 530 deep (millimeter) was thermoformed by the process shown in Figs. 8 to 11. Major molding conditions are as follows:
Surface temperature of sheet: 169°C
Spreading ratio of clamp: 118.6 %
Lowering height of plug: 50 mm

Thickness of the molded article was measured at 45 points (excepting the flange). The measurements are shown in Table 1.

### COMPARATIVE EXAMPLE 1

Using the same mold and acrylic resin sheet as those used in Example 1, normal vacuum forming was conducted without carrying out spreading and closing the clamp. The measurements of thickness of the molded article obtained in the same manner as Example 1 are shown in Table 1.

**TABLE 1**

| | Example 1 | Comparative Example 1 |
|---|---|---|
| minimum thickness (corner portion) | 0.8 mm | 0.4 to 0.5 mm |
| thickness of side wall | 1.0 to 1.6 mm | 0.8 to 1.4 mm |

The results in Table 1 show that the molded article according to the present invention is a product having an evener thickness and a larger minimum thickness with less thickness variation throughout the molded article despite using a thin acrylic resin sheet with a thickness of 3 millimeter.

### EMBODIMENT 2

The EMBODIMENT 2 of the present invention is related to a product according to the preceding injection molding steps. This embodiment is explained based on Figs. 5 to 7 and 12.

As shown in Figs. 5 to 7 and 12, a roughly-molded surface layer member 4 is first put on the male mold member 5 of an injection molding mold, and subsequently, the male mold member 5 and the female mold member 6 are clamped. After that, a resin (A) 14, a resin (B) 15, a resin (C) 16 prepared in the hoppers for feeding raw material, the three resins being thermoplastic resins for forming the outer reinforcing shell layer 11, and a glass fiber masterbatch 17 containing long fibers are independently weighed in a predetermined proportion and then mixed using a weighing type mixing machine 18. The resulting mixture is melt kneaded in an injection molding machine 19 and directly subjected to injection molds. Thus an outer reinforcing shell layer 11 with excellent strength in which resin suffers from little heat degradation and which is reinforced with longer glass fibers can be formed.

As the foregoing resin composition, ABS resin or AS resin which exhibits good adhesion to the acrylic resin of the roughly-molded surface layer member 4 is preferred. In the case of ABS resin, the resin (A) 14 and the resin (B) 15 are composed of AS resin and the resin (C) 16 is composed of ABS resin which contains a rubbery polymer in a high concentration. It is desirable that the glass fiber masterbatch 17 containing long fibers is composed of 5 to 10 millimeter long glass fibers and AS or ABS resin which is combined with the glass fibers and the concentration of the glass fibers is 50 % to 90 %. The content of the glass fibers in the thermoplastic resin mixed with the weighing type mixing machine 18 is preferably about 10 to 30 % by weight in view of a balance between rigidity and moldability. Additionally, in the case of ABS resin, the content of the rubbery polymer is preferably 5 to 30 % by weight. The injection molding machine 19 has no particular limitations, but a mixing nozzle or a Dulmage type screw is desirably used. An injection molding temperature is preferably set to be 10 to 30°C higher than that for conventional ABS resin and AS resin.

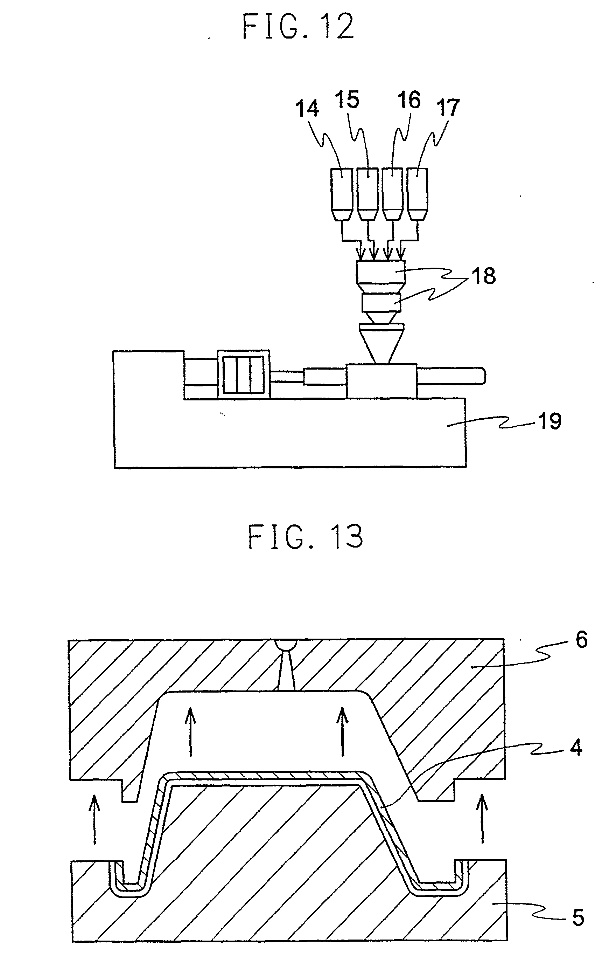

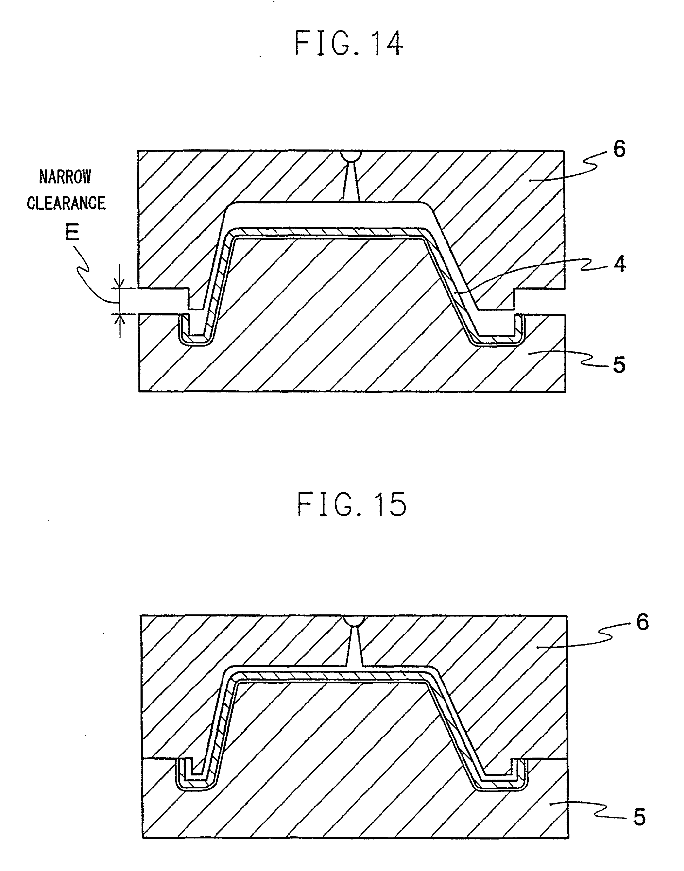

When the male die 5 and the female die 6 are clamped as shown in Figs. 13 to 15, they are clamped incompletely and with keeping a slightly opened state (see the narrow clearance depicted in Fig. 14) and the preceding thermoplastic resin is injection molded. In such an occasion, a sealing mechanism must be provided in order to prevent a resin from flowing through the mold parting surface defined between the male die 5 and the female die 6 depending upon the shape of the molded article. Flow of the thermoplastic resin which is reinforced with long glass fibers and which has low fluidity can be facilitated and even a thin outer reinforcing shell layer 11 can be easily subjected to injection mold by closing the male die 5 and the female die 6 completely and putting injection pressure sufficiently and uniformly by operating a hydraulic mechanism (not shown) of the injection molding machine during injection or immediately after completion of injection. However, this process is not necessarily required to be used for all thin outer reinforcing shell layers. It need not be adopted depending upon the shape of the roughly-molded surface layer member 4.

### EXAMPLE 2

An ABS obtained by the process of the present invention which has a resin composition identical to that of a conventional glass fiber reinforced ABS R240A (manufacture by Asahi Chemical Industry Co., Ltd.), and as Comparative Examples, the conventional glass fiber reinforced ABS (that is, R240A) and an ABS which is not reinforced with glass fibers were selected as comparative examples. Each material was measured own bending strength, modulus of bending elasticity, Izod impact strength and length of glass fibers in a molded article. The measurements are shown in Table 2.

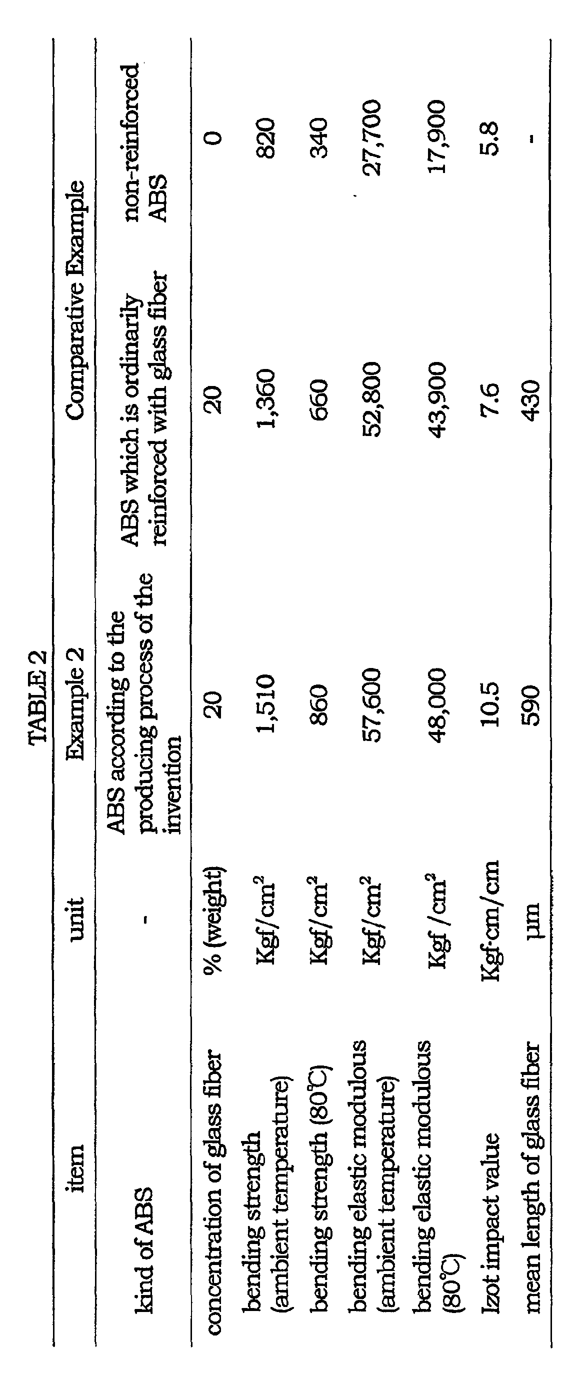

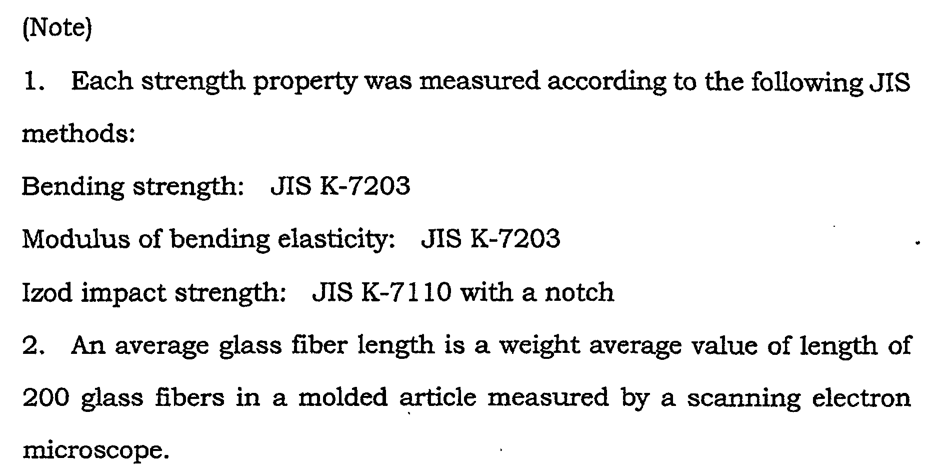

### EXAMPLE 3

As for bathtubs 750 wide × 1,400 long × 550 deep (millimeter) which had different side wall thickness wherein each of them had an outer reinforcing shell layer which was composed of an ABS resin prepared by the process of the present invention whose resin composition was identical to that of R240A, an AS resin prepared by the process of the present invention, or, as Comparative Examples, the R240A (manufactured by Asahi Chemical Industry Co., Ltd.) adopted in Example 2, a boiling test provided in the JIS about bathtubs (JIS A1718) was carried out. A change in dimension of the center part of a side wall of a bathtub in conditions of normal temperature and being fully filled with water between before the boiling test and in the last cycle of the boiling test was measured. The measurements were shown in Table 3.

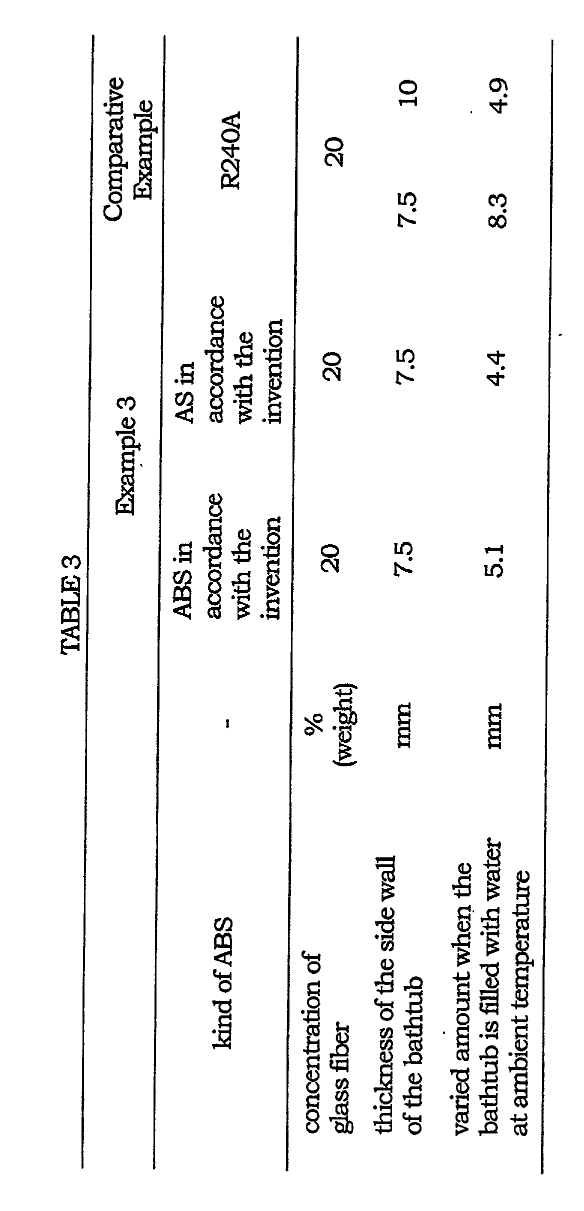

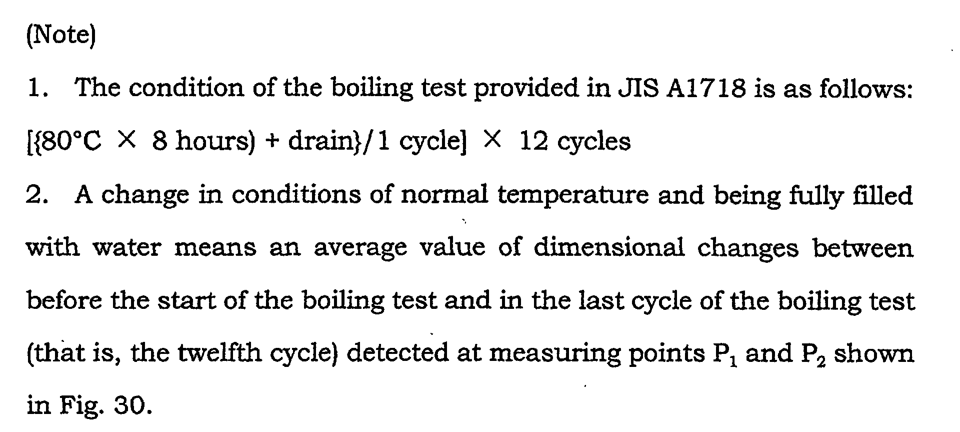

The results in Table 2 clearly show that the conventional glass fiber reinforced ABS has remarkably improved mechanical characteristic and has bending strength and modulus of bending elasticity about twice as much in comparison with the non-reinforced ABS which is not reinforced with glass fibers. The glass fiber reinforced ABS has sufficient property to be used as a thermoplastic resin for forming an outer reinforcing shell layer. However, since the glass fiber reinforced ABS prepared by the process of the present invention maintains glass fibers longer in a molded article and suffers from less heat degradation of rubbery components in comparison with the conventional glass fiber reinforced ABS, it has improved strength properties which have been expected. That is, bending strength and modulus of bending elasticity were increased by about 10 percent and Izod impact strength was increased by about 30 percent according to the results in Table 2. In addition, as shown in Table 3, each of the bathtub having an outer reinforcing shell layer formed of the ABS resin prepared by the process of this invention and the bathtub having an outer reinforcing shell layer of the AS resin prepared by the process of this invention has almost the same change in conditions of normal temperature and being fully filled with water between before and after the JIS boiling test as that in the case of R240A (manufactured by Asahi Chemical Industry Co., Ltd.) and 10 mm even if their side wall thickness was decreased from 10 mm to 7.5 mm. Although conventional ABS resin can provide a bathtub of considerable rigidity inherently, it has been revealed that reinforcement of an outer shell layer with a thermoplastic resin of high modulus of bending elasticity using the process of this invention can reduce the side wall thickness more and can provide a bathtub with light weight and low cost.

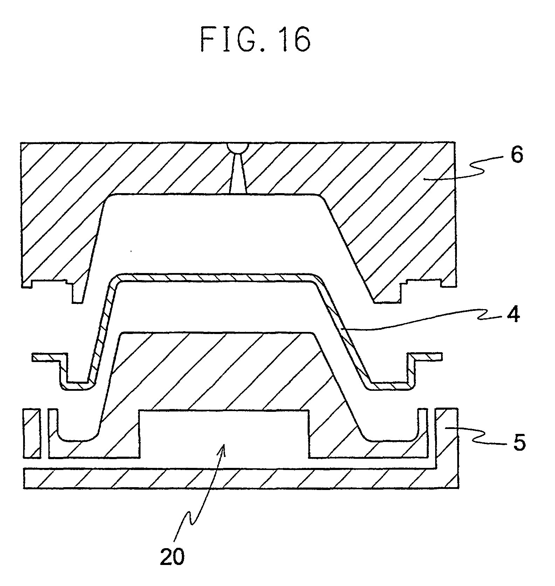

The EMBODIMENT 3 is related to a process which can provide containers and panels of high quality in the preceding injection molding steps. This embodiment is explained based on Figs. 16 to 19.

The male die 5 of the preceding injection molding mold is provided with a vacuum path 20 as shown in Figs. 16 to 18 and connected with a vacuum pump (not shown). Size of the vacuum path 20 is set to be 0.5 to 3.0 mm in diameter in the case of a hole shape, and 0.05 to 0.5 mm in width in the case of a slit shape. In general, the vacuum path is provided continuously or discontinuously in the peripheral portion of the male die.

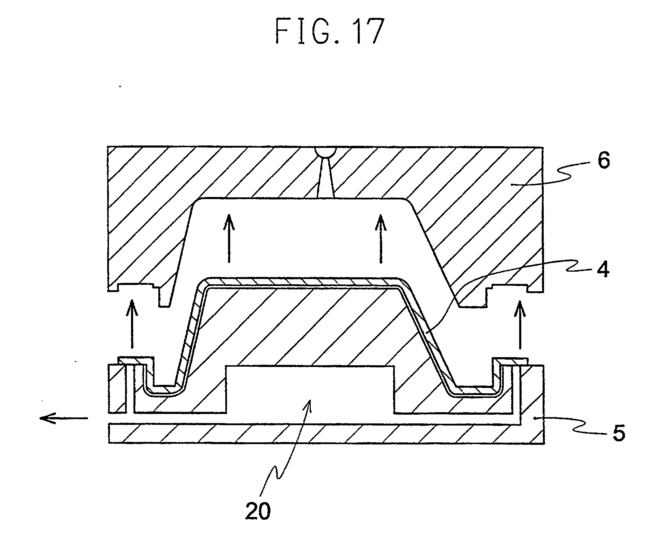

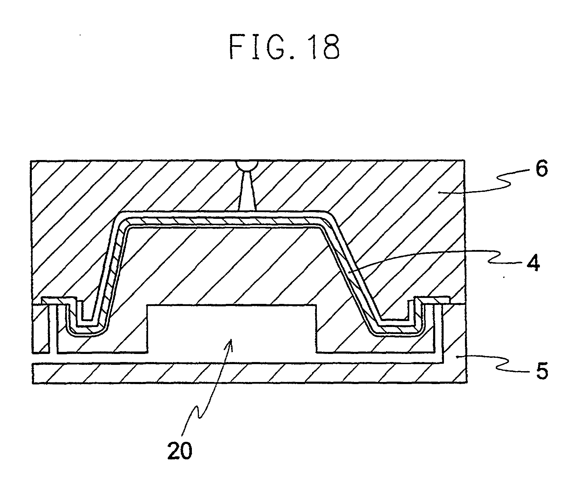

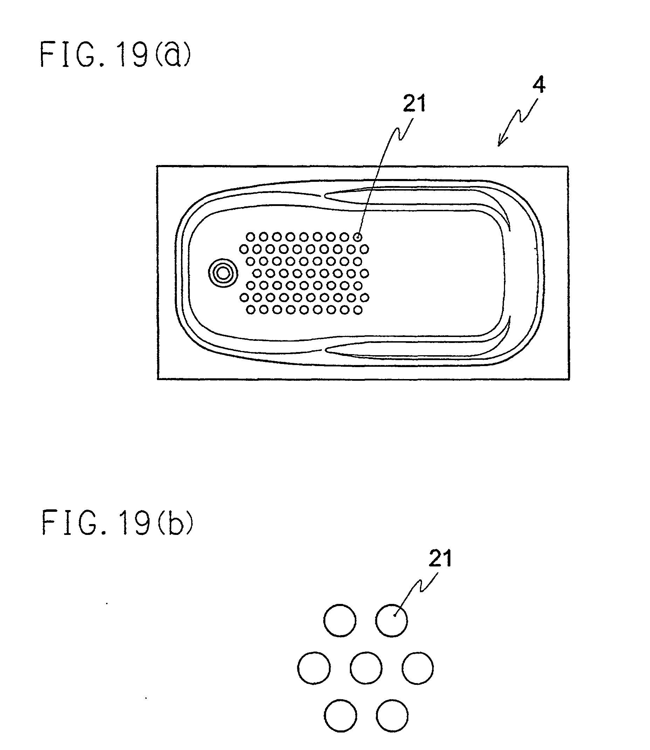

The preceding roughly-molded surface layer member 4 is placed as shown in Fig. 16. Subsequently, the vacuum pump is operated to conduct evacuation as shown in Fig. 17, thereby tightly closing a gap between the roughly-molded surface layer member 4 and the male die 5 created because of the difference in dimensional accuracy between the vacuum molded surface layer member 4 and the male die 5 machined with very high precision. After that, the male die 5 is moved toward the female die 6 as shown in Fig. 18, so that the mold is clamped. An outer reinforcing shell layer 11 is then injection molded. The second thermoforming is carried out smoothly along the male die 5 by the resin temperature and injection secondary pressure at the injection molding to provide containers and panels with no wrinkles and cracks. Additionally, in the production of a container which needs a skid on its bottom and the like as shown in Fig. 19, the male die 5 is provided with an uneven shape of a skid 21. Since the molded article produced by injection molding can obtain ability of copying the mold shape higher than that attained in vacuum forming, the skid 21 can be formed in a sharp shape when the roughly-molded surface layer 4 is thermoformed again along the male die by injection molding of the outer reinforcing shell layer 11 and a container having a skid which can exhibit an excellent skidding effect can be obtained.

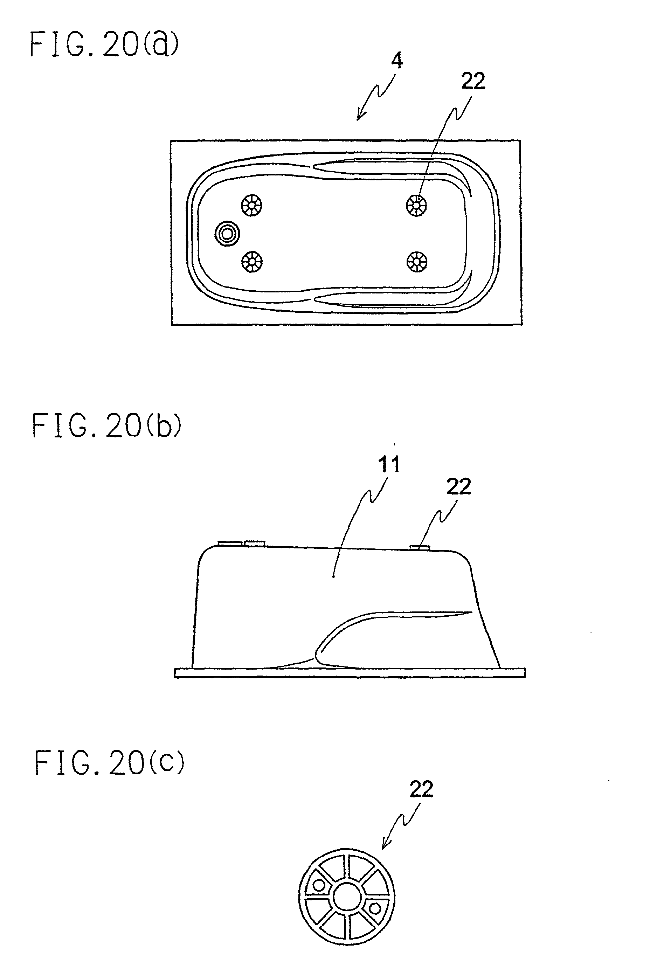

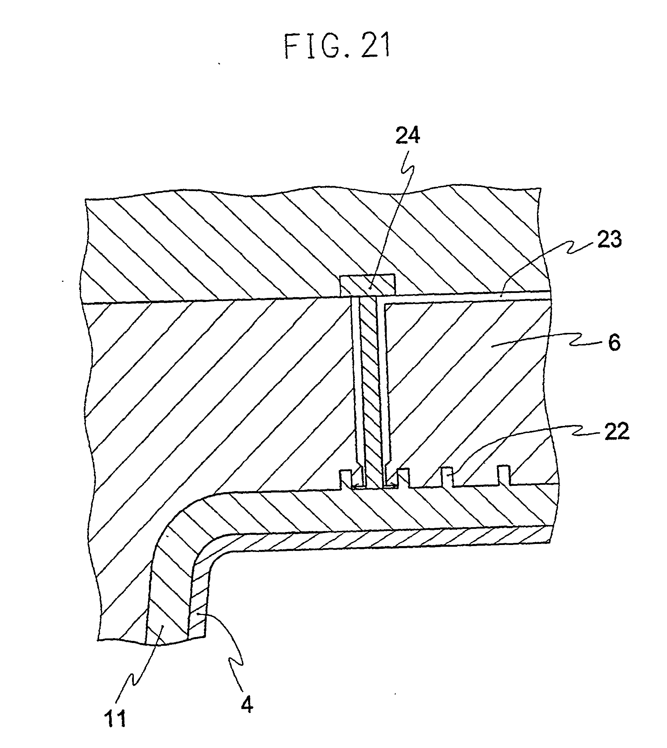

The EMBODIMENT 4 is related to the process for integrally forming a leg, a reinforcing rib or the like in the preceding injection molding steps. A container having a level adjusting leg 22 on the rear surface of the bottom shown in Figs. 20 and 21 is explained.

A molten thermoplastic resin for forming an outer reinforcing shell layer is fed to the rear side of the roughly-molded surface layer member 4 by injection as shown in Fig. 20. Thereafter, as shown in Fig. 21, a compressed inert gas 23 is supplied under pressure between the cavity of the level adjusting leg 22 of the female die 6 and the thermoplastic resin from the rear side of the molded article. The inert gas 23 is supplied from a compressed gas source (not shown) to a gas supplying pin 24 provided to the female die 6. As the compressed gas, inert gasses such as nitrogen are desirable. Pressure of the compressed gas is 30 to 150 kgf/cm². A delay from the injection of the thermoplastic resin to the supply of the compressed gas is adjusted depending upon thickness and shape of a thick part. The compressed gas is supplied under pressure and hold between the cavity of the leg 22 of the female die 6 and the thermoplastic resin, thereby pressing the other surface of the molded article against the inner surface of the mold cavity. This can accomplish the integral molding without causing no sink mark on the surface of the level adjusting leg 22 which is partly thick and can save excess effort of post-mounting accessory parts.

### EXAMPLE 4

A bathtub 750 wide × 1,400 long × 550 deep (millimeter) composed of a surface layer member of an acrylic resin and an outer reinforcing shell layer of a glass fiber reinforced ABS resin which must be provided with four level adjusting legs on its rear surface as shown in Fig. 24 was injection molded by the process of the present invention.

Diameters D₁ to D₅ and heights (thicknesses) t₁ to t₃ of parts of the level adjusting leg 22 are as follows:
(unit: millimeter)
D₁: 18 φ ; D₂ : 23 φ ; D₃: 65 φ ; D₄: 82 φ ; D₅ : 88 φ
t₁: 5; t₂: 7.5; t₃: 3.5

Major molding conditions are as follows:
Cylinder temperature: 240°C
Injection pressure: 110 kg/cm² (gauge pressure)
Pressure of compressed gas: 50 kg/ cm² (gauge pressure)
Delay in gas supplying: 60 seconds

Appearance of the bathtub was visually judged from the side of its surface layer member. The result is shown in Table 4.

### COMPARATIVE EXAMPLE

Using the same bathtub as that used in Example 4, normal injection molding was carried out without supplying an inert gas 23 to the thick part of the level adjusting leg 22. Appearance of the bathtub was visually judged from the side of its surface layer member. The result is shown in Table 4.

**TABLE 4**

| | Example 4 | Comparative Example |
|---|---|---|
| sink mark on a surface of a leg receiving part | sink mark was not appeared | sink mark was appeared |

As shown by the results in Table 4, the molded article produced by the process of the present invention was a bathtub with good appearance and little sink mark. Hitherto integral molding of accessory parts such as a leg receiving part could not be executed because of the sink problem, but this invention have made this possible.

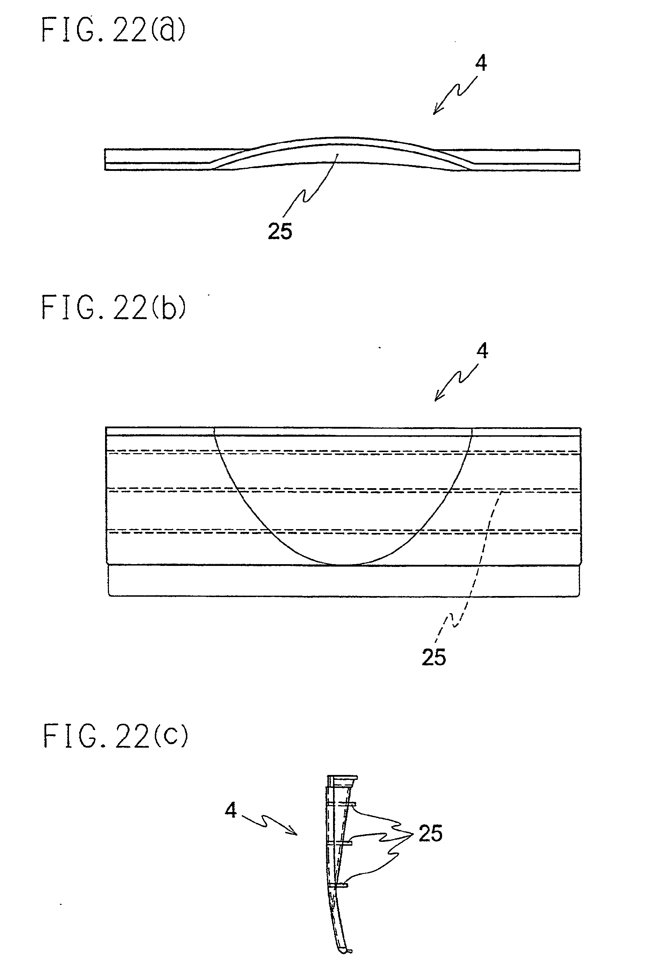

Next, a panel reinforced with ribs as shown in Fig. 22 is explained as another process in which a leg receiving part or a reinforcing rib is integrally molded.

An attempt to provide a reinforcing rib to the rear surface of a roughly-molded thin surface member 4 with a counter apron form by injection molding in order to ensure its strength results in formation of a large sink on the reinforcing rib part and significant damage of appearance when, for example, a reinforcing rib 2.5 to 3.0 millimeter thick and 30 millimeter high is formed by a normal injection molding method. On the contrary, the present invention uses a expandable resin as a thermoplastic resin and injects the molten expandable resin in a small amount as much as 90 to 95 % of the cavity volume of the injection molding mold. Thereafter, a compressed inert gas is supplied (not shown) to press the molten expandable resin firmly to the mold cavity surface, and then the compressed inert gas is released to expand the molten resin to an expansion ratio of less than about 1.1. As a result, a counter apron having no sink in the surface of its reinforcing rib part which is excellent in strength even if it is thin can be obtained.

A blowing agent to be used for preparing the expandable resin is not particularly restricted as long as it is the most suitable for a thermoplastic resin to be used. Representative examples include chemical blowing agents such as azodicarbonamide and sodium bicarbonate, and physical blowing agents such as carbon dioxide and butane. For ABS resin and AS resin, Fineblow (manufactured by Mitsubishi Chemical Corp.) is desirably used. An addition amount of a blowing agent varies depending on a kind of a blowing agent and a desired expansion ratio and can not be determined absolutely. In the process of this invention, the amount of the blowing agent is desirably set to be 0.2 to 1.0 % (by weight) based on the thermoplastic resin.

The synthetic resin sheet to be used in the present invention may be a cast acrylic board prepared by casting a thermoplastic acrylic resin, an acrylic board prepared by extrusion, and the like. Among them, a partially crosslinked cast acrylic board can be suitably employed in the present invention because of its excellent surface hardness, chemical resistance and thermoformability. Although thickness of the acrylic resin sheet is not particularly restricted. Thickness of the acrylic resin sheet to be used is preferably not more than 4 millimeter, especially desirably not more than 3 millimeter because the present invention is characterized in that a thermoformed article with more uniform thickness distribution is obtained by using a thin sheet.

The acrylic resin sheet to be used may be transparent, colored so as to be translucent, or colored. When molding is conducted using a transparent acrylic resin sheet, and a thermoplastic resin which is used for forming an outer reinforcing shell layer is first colored or mixed with a colorant and a filler which can be finished into a pattern such as a grain pattern and a marble pattern and then injected, a product possessing a more deluxe image can be obtained. In such a product, a beautiful surface appearance can be achieved without no glass fibers and fillers coming out of the surface because of the heat insulation effect of the mold caused by the molded acrylic resin sheet even if the thermoplastic resin is a resin reinforced with glass fibers. Thus the color or the pattern such as the grain pattern of the outer reinforcing shell layer can be seen through a transparent surface layer in a deep color tone. In addition, when an acrylic resin sheet, which is transparent or colored so as to be translucent, is used and an AS resin which is colored so as to be translucent or a transparent resin is used at least for the first layer of the outer reinforcing shell layer, a product which has a light but deep marble image.

As the thermoplastic resin for the outer reinforcing shell layer, ABS resin, AS resin, impact resistant polystyrene resin, polycarbonate, olefinic resin, modified polyphenylene ether resin, and the like can be used. Among these resins, ABS resin and AS resin which have good fusability to acrylic resin are preferred.

Next, referring to attached drawings, a process for reproducing an acrylic bathtub (henceforth, referred merely to as a "bathtub") is explained as another example of the process for producing the synthetic resin molded article of the present invention.

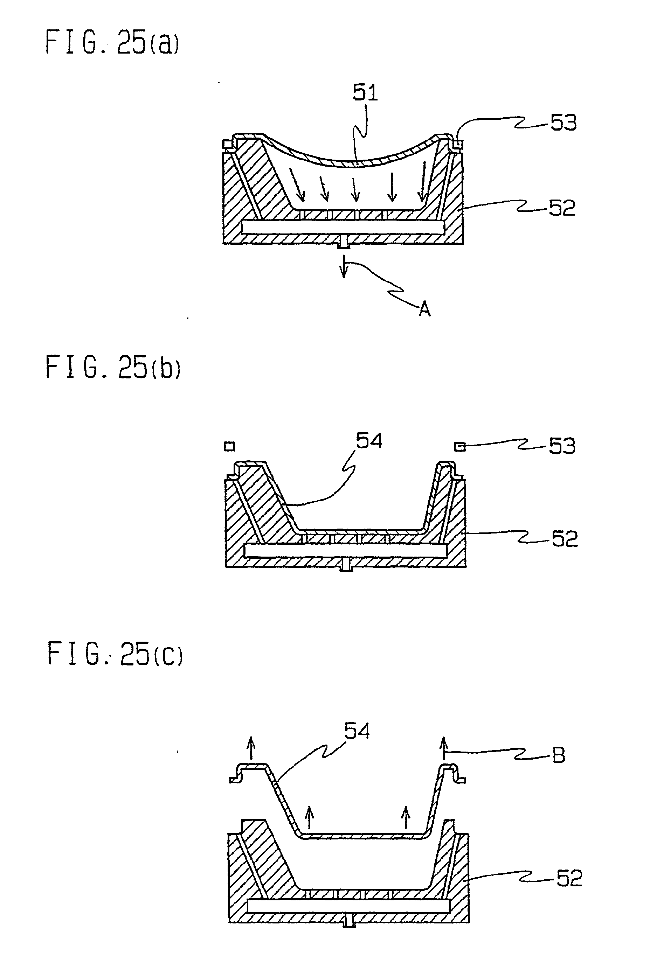

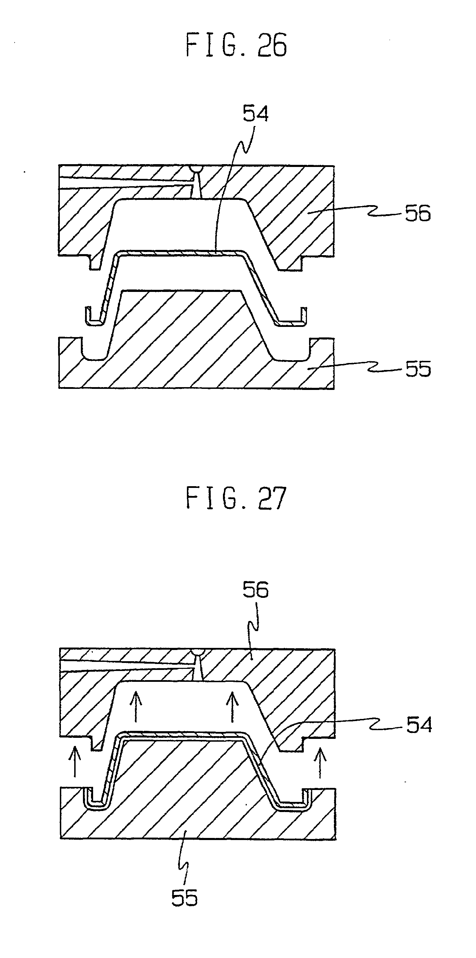

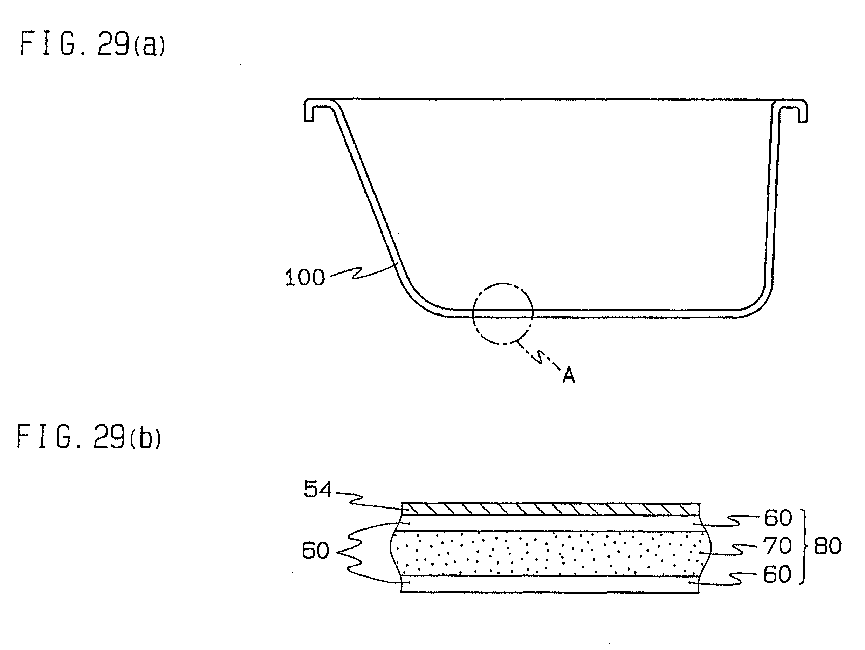

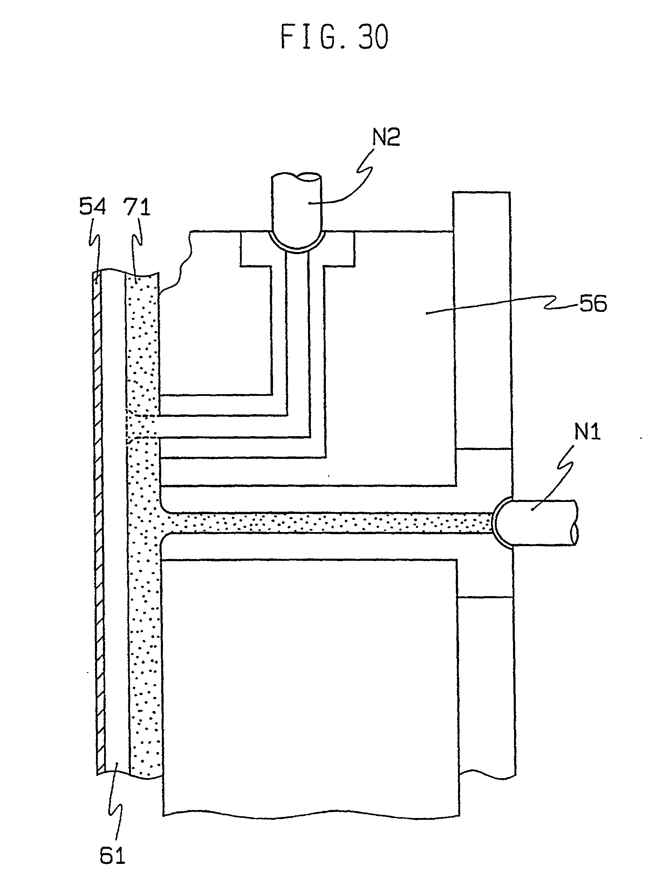

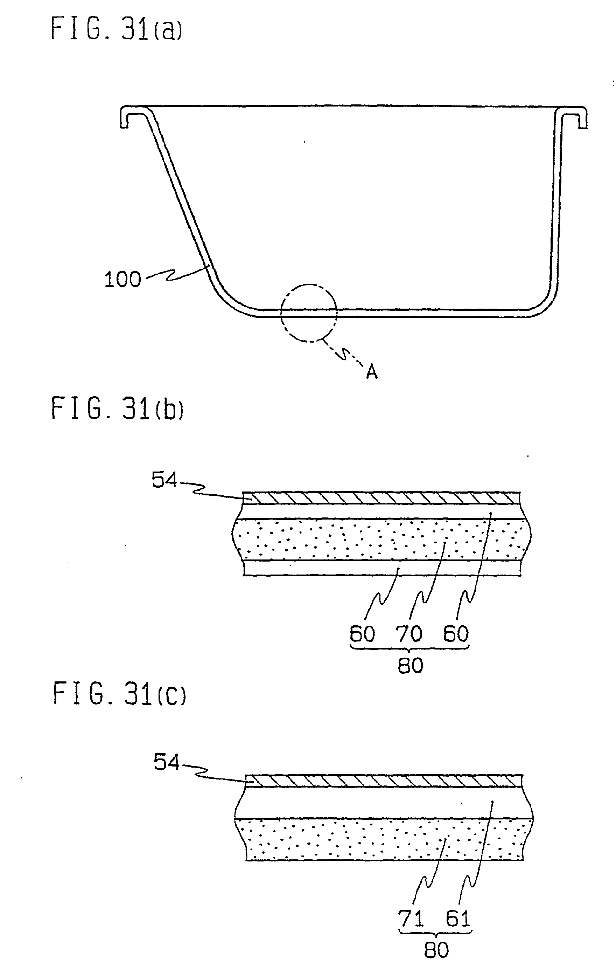

Fig. 25 is an explanatory view which illustrates an embodiment of vacuum forming steps relating to the reproducing process of the present invention. Figs. 26 to 28 are explanatory views which illustrate an embodiment of injection molding steps relating to the reproducing process of the present invention. Fig. 29 (a) is an explanatory view which illustrates an example of a structure of a bathtub produced by a reproducing process relating to an embodiment of the present invention. Fig. 29 (b) is a partially detail view of Fig. 29 (a). Fig. 30 is an explanatory view which illustrates an example of injection molding steps relating to another embodiment of the reproducing process of the present invention. Fig. 31 (a) is an explanatory view which illustrates an example of a bathtub produced by a reproducing process relating to another embodiment of the present invention. Figs. 31 (b) and (c) are partially detail views of Fig. 31 (a).

### EMBODIMENT 5

The process for reproducing a bathtub according to the EMBODIMENT 5 of the present invention.

First, metal fittings such as a drain pipe and a stopcock are removed from an acrylic bathtub to be scrapped and the bathtub is cut into pieces about 150 mm to 250 mm square using a circular saw or a band saw.

Next, the pieces are fed to a crusher (for example, a Hammer Crusher manufactured by Kinki Industry Co., Ltd.), and the acrylic resin layer and the thermoplastic resin containing reinforcing glass fibers which constitute the acrylic bathtub are crushed into a size of about 10 to 20 mm. The crushed pieces are fed to a crusher (for example, UO-360 manufactured by Horai Iron Works Co., Ltd.) to be grained into a size of not more than 10 mm to yield a recycled material.

In the next step, as shown in Fig. 25 (a), a cast acrylic board 51 which is a synthetic resin sheet (corresponding to the acrylic resin sheet 1 used in EMBODIMENTS 1 to 4) is placed on the female die 52 of an vacuum forming mold (corresponding to the vacuum forming mold 2 used in EMBODIMENTs 1 to 4), and then the board is clamped at its periphery portion with a clamping member 53. The cast acrylic board 51 is heated and softened at about 175 to 205°C and evacuated in the direction indicated by the arrow A.

Subsequently, as shown in Figs. 25 (b) and (c), the clamping member 53 is released after cooling, an inner surface layer member 54 (corresponding to the roughly-molded surface layer member 4 and the surface layer member 10 used in EMBODIMENTs 1 to 4) is pulled out of the female die 52 in the direction indicated by the arrow B. In addition, trimming of the edge is done depending upon the shape.

After this, injection molding is carried out. That is, injection molding molds 55 and 56 are opened and the inner surface layer member 54 is inserted into the molds 55 and 56, followed by closing the molds 55 and 56 (see Figs 26 and 27).

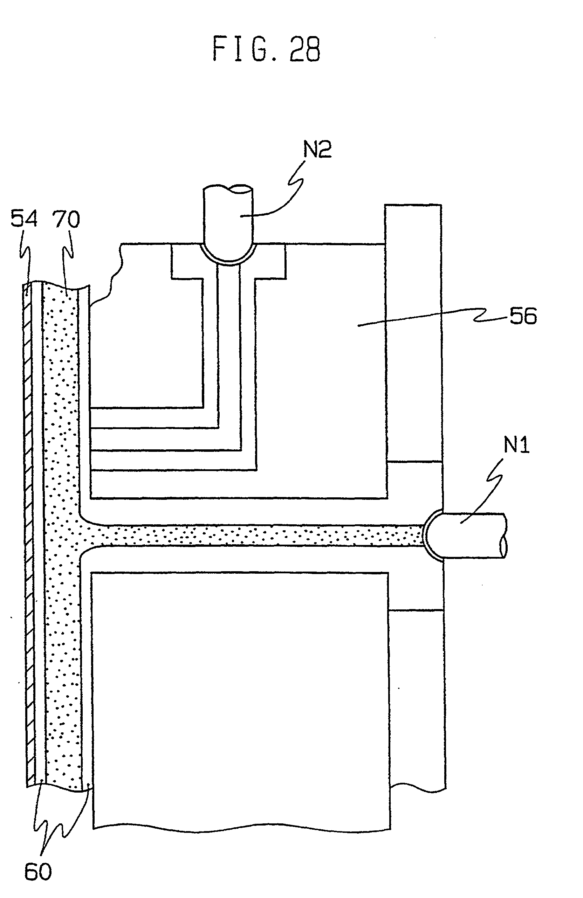

Next, in order to increase rigidity, a thermoplastic resin 60 which will become a skin layer of an outer reinforcing shell layer containing about 10 to 30 % by weight of about 1 to 10 mm long glass fibers is heated to about 220 to 280°C and molten, and then injected through the second nozzle N2 into a cavity lying between the female die 56 and the inner surface layer member 54 inserted in the injection molding molds 55 and 56 (see Fig. 28).

Next, the foregoing grained mixture 70 of the acrylic resin and the thermoplastic resin containing the reinforcing glass fibers are heated to 230 to 290°C and molten, and injected into the cavity through the first nozzle to constitute an inner layer 70 and simultaneously form an outer reinforcing shell layer 80 having a sandwich structure (corresponding to the outer reinforcing shell member 11 in EMBODIMENTs 1 to 4) (see Figs. 28 and 29).

By the injection temperature (about 220 to 290°C) and the injection pressure (about 200 to 1000 kgf/cm²) in this injection molding, the inner surface layer member 51 is softened and formed again, and simultaneously, the inner surface layer member 54 and the outer reinforcing shell layer 80 are fused.

As shown in Fig. 29 (b) (a detail view of the area surrounded by the circle A in Fig. 29 (a)), the bathtub 100 which has been reproduced as described above is composed of the inner surface layer 54 and the outer reinforcing shell layer 80 which is provided outside the inner surface layer 54. The outer reinforcing shell layer is composed of the skin layers 60 and the intermediate layer 70 provided between the skin layers 60 (see Fig. 29 (b)).

### EMBODIMENT 6

Next, the process for reproducing a bathtub according to EMBODIMENT 6 of the present invention is explained.

First, metal fittings such as a drain pipe and a stopcock are removed from an acrylic bathtub to be scrapped and the bathtub is cut into pieces about 150 mm to 250 mm square using a circular saw or a band saw.

Next, the pieces are fed to a crusher (for example, a Hammer Crusher manufactured by Kinki Industry Co., Ltd.), and the acrylic resin layer and the thermoplastic resin containing reinforcing glass fibers which constitute the acrylic bathtub are crushed into a size of about 10 to 20 mm. The crushed pieces are fed to a crusher (for example, UO-360 manufactured by Horai Iron Works Co., Ltd.) to be grained into a size of not more than 10 mm to yield a recycled material.

In the next step, as shown in Fig. 25 (a), a cast acrylic board 51 which is a synthetic resin sheet is placed on the female die 52 of an vacuum forming mold, and then the board is clamped at its periphery portion with a clamping member 53. The cast acrylic board 51 is heated and softened at about 175 to 205°C and evacuated in the direction indicated by the arrow A.

Subsequently, as shown in Figs. 25 (b) and (c), the clamping member 53 is released after cooling, an inner surface layer member 54 is pulled out of the female die 52 in the direction indicated by the arrow B. In addition, trimming of the edge is done depending upon the shape.

After this, injection molding is carried out. That is, injection molding molds 55 and 56 are opened and the inner surface layer member 54 is inserted into the molds 55 and 56, followed by closing the molds 55 and 56 (see Figs 26 and 27).

Next, in order to increase rigidity, a thermoplastic resin 60 which will become a skin layer of an outer reinforcing shell layer containing about 10 to 30% by weight of about 1 to 10 mm long glass fibers is heated to about 220 to 280°C and molten, and then injected through the second nozzle N2 into a cavity lying between the female die 56 and the inner surface layer member 54 inserted in the injection molding molds 55 and 56 (see Fig. 30).

Subsequently, the molds are slightly opened to adjust a clearance of the mold cavity to correspond to the thickness of the bathtub 100. The preceding grained mixture 71 of the acrylic resin and the thermoplastic resin is heated to about 230 to 290°C and molten, and injected through the first nozzle N1 into the cavity lying between the thermoplastic resin 61 which has been injected in advance and the female die 56, so that the outer reinforcing shell layer having a two layered structure is integrally molded (see Figs. 30 and 31).

Furthermore, the reproduction according to EMBODIMENT 5 of the present invention can be performed by using the injection molding mold shown in Fig. 30.

By the injection temperature (about 220 to 290°C) and the injection pressure (about 200 to 1000 kgf/cm²) in this injection molding, the inner surface layer member 54 is softened and formed again, and simultaneously, the inner surface layer member 54 and the outer reinforcing shell layer 80 having two layers are fused.

As shown in Fig. 31 (c) (a detail view of the area surrounded by the circle A in Fig. 31 (a)), the bathtub 100 which has been reproduced as described above is composed of the inner surface layer 54 and the outer reinforcing shell layer 80. The outer reinforcing shell layer is composed of the first layer 61 and the second layer 71 which is the outermost layer (see Fig. 31 (c)).

Thermoplastic resin which is adopted in the fifth and sixth embodiments include, for example, ABS resin, AS resin, polycarbonate, polyester resin, olefinic resin and modified polyphenylene ether. ABS resin and AS resin are desirable from the viewpoints of fusability to acrylic resin and impact resistance. These may be ether reinforced or not reinforced with glass fibers and are used properly depending upon physical properties such as strength and rigidity which bathtubs are required to have and visual properties such as color tone and patterns.

As materials for the intermediate layer 70 and the second layer 71, the foregoing grained mixture of the acrylic resin and the thermoplastic resin containing glass fibers may be used directly, and alternatively, a mixture prepared by adding an appropriate amount of ABS resin or AS resin which is or is not reinforced with glass fibers. Furthermore, the bathtub produced by the prior technique 1 may be used after being grained in place of a part of or the whole of the foregoing grained recycled materials of bathtubs. A way to refine bathtubs is not necessarily limited to one described in this description. For example, graining may be conducted at a time using a crusher.

The vacuum forming machine 52 and the injection molding machine may be separate. Alternatively, the injection molding machine may possess the function of the vacuum forming machine together. The injection molding machine is preferably a sandwich molding machine or a two color molding machine. A mode may be either a vertical mode or a horizontal mode. In addition, the male die 55 of the injection molding is desirably provided with a vacuum hole which permits evacuation as the foregoing EMBODIMENTs.

### INDUSTRIAL APPLICABILITY

According to the present invention, a process for producing synthetic resin containers and panels having strength and rigidity sufficient to endure a tough heat resistance test and being of high quality, light weight and low cost. Furthermore, because this invention uses a thermoplastic resin as a raw material, it can provide a process for reproducing an acrylic bathtub which can be easily recycled as a raw material and a bathtub produced by this process.

## Claims

1. Process for producing a synthetic resin molded article comprising a step of:
subjecting a synthetic resin sheet to two-step thermoforming to prepare a container and a panel like surface layer member;
wherein said synthetic resin molded article includes an outer reinforcing shell layer provided to the rear surface of said surface layer member; and
wherein said outer shell reinforcing member is obtained by subjecting to an injection molding of glass fiber reinforced ABS resin or glass fiber reinforced AS resin or non-reinforced ABS resin or non-reinforced AS resin.

2. The process of Claim 1, wherein in thermoforming the surface layer member, a step of clamping the synthetic resin sheet with a clamping unit, a step of heating and softening the synthetic resin sheet followed by moving and spreading the clamping unit in the direction in which the sheet is spread, a step of moving the spread clamping unit in the direction in which the unit is closed with lowering a plug for thermoforming partway and a step of pushing up a thermoforming mold to form the surface layer member into the shapes of a container and a panel are included, so that a surface layer member with a uniform thickness can be obtained using a thin synthetic resin sheet.

3. The process of any one of Claims 1 and 2, wherein the outer reinforcing shell layer is comprised of thermoplastic resin with sufficient strength by weighing and mixing a single or a plurality of thermoplastic resin having a resin composition and a masterbatch of long glass fiber in a predetermined proportion followed by melt kneading them in an injection molding machine, and directly injection molding the resulting mixture.

4. The process of Claim 3, wherein said resin composition is composed of AS resin, or comprised of one or two AS resin and ABS resin, said ABS resin having high concentration of rubbery polymer.

5. The process of any one of Claims 3 and 4, wherein said masterbatch of long glass fiber is composed of AS resin or ABS resin which is combined with glass fiber having a length of 5 to 10 mm, and a concentration of said glass fiber is 50 to 90 % by weight.

6. The process of any one of Claims 1, 2, 3, 4 and 5, further including steps of placing said surface layer member on a injection molding mold, subsequently closing the mold with keeping a state where the mold is slightly open, injection molding a molten thermoplastic resin, and then compressing the mold until it is closed completely.

7. The process of any one of Claims 1, 2, 3 and 6, wherein a male die of said injection molding mold is provided with a vacuum path, the surface layer member being placed on the male die, and the surface layer member is sufficiently engaged with the male die to evacuate the mold, and then the molten thermoplastic resin is subjected to injection molding.

8. The process of any one of Claims 1, 2, 3, 6 and 7, wherein the male die for placing the surface layer member is provided with a skidding means obtained by subjecting said surface layer member to thermoforming twice in case of subjecting to injection molding of thermoplastic resin, so that skidding effect can be obtained by sharp shape.

9. A process for producing a container and a panel of synthetic resin having a thick part such as a level adjusting leg and a reinforcing rib using the process of any one of Claims 1, 2, 3, 7 and 8: said process including steps of,
injecting a molten thermoplastic resin for forming the preceding outer reinforcing shell layer,
supplying an inert gas under pressure between the cavity of the injection molding mold and the thermoplastic resin from the rear side of the molded article only in the thick part such as the leg or the rib, and
pressurizing and cooling said molded article, so as to be formed integrally without forming a sink mark in the surface of the thick part such as the leg receiving part and the rib which are thin.

10. The process of Claim 9, wherein said thermoplastic resin of the outer reinforcing layer is foamed synthetic resin obtained by injecting the molten thermoplastic resin of the outer reinforcing layer, and expanding the thermoplastic resin in such a manner that an expansion ratio is less than 1.1, so that integrally forming can be attained without generating any sink mark in the surface of the thick parts.

11. A molded article produced by the process of any one of Claims 1, 2, 3, 4, 5, 6, 7, 8, 9 and 10, wherein said molded article is a container or a panel, the synthetic resin sheet is acrylic resin sheet colored in such a manner that transparency or translucency can be attained, and wherein thermoplastic resin of the outer reinforcing layer is mixed with coloring agent and a filler in such a manner that said thermoplastic resin of the outer reinforcing layer can be colored or patterned like a marbling.

12. A molded article produced by the process of any one of Claims 1, 2, 3, 4, 5, 6, 7, 8, 9 and 10, wherein said molded article is a container or a panel, and wherein the synthetic resin sheet is colored acrylic resin sheet.

13. A molded article produced by the process of any one of Claims 1, 2, 3, 4, 5, 6, 7, 8, 9 and 10, wherein said molded article is a container or a panel, and wherein thermoplastic resin of the outer layer is glass fiber reinforced ABS resin or glass fiber reinforced AS resin or non-reinforced ABS resin or non-reinforced AS resin.

14. A molded article produced by the process of any one of Claims 1, 2, 3, 4, 5, 6, 7, 8, 9 and 10, wherein said molded article is a container or a panel, wherein the surface layer member is made of translucently colored ABS resin or AS resin or transparently colored ABS resin or AS resin; wherein at least the first layer of the surface layer member is made of translucently colored ABS resin or AS resin; and wherein said molded article is patterned like a marble having light depth.

15. A molded article produced by the process of any one of Claims 1, 2, 3, 4, 5, 6, 7, 8, 9 and 10, wherein said molded article is a container or a panel, wherein the surface layer member is provided with a skidding means to have a sharp shape and an improved skidding effect obtained by subjecting said surface layer member to thermoforming twice when said outer reinforcing member is subjected to an injection molding.

16. A molded article produced by the process of any one of Claims 1, 2, 3, 4, 5, 6, 7, 8, 9 and 10, wherein said molded article is a container or a panel, wherein the molded article is composed an outer reinforcing layer member, in which mean length of the glass fiber is 400 to 1000 µm.

17. A molded article produced by the process of any one of Claims 1, 2, 3, 4, 5, 6, 7, 8, 9 and 10, wherein a thickness of said outer reinforcing layer is reduced, in such a manner that said reinforcing layer is formed integrally with a reinforcing rib to retain a strenth.

18. A process forfor reproducing a bathtub which is the fifth embodiment of the process for producing a synthetic resin molded article comprising steps of:
(a) removing metal fittings from an acrylic bathtub to be scrapped and cutting the bathtub into pieces of a predetermined size;
(b) feeding the pieces to a crusher to grain both the acrylic resin layer and the thermoplastic resin layer containing reinforcing glass fibers which constitute the acrylic bathtub;
(c) thermoforming an acrylic resin sheet first into a bathtub-shaped inner surface layer member;
(d) opening an injection molding mold, inserting the inner surface layer member and closing the mold;
(e) injecting a molten thermoplastic resin which is or is not reinforced with glass fibers from the second nozzle into a cavity lying between the inner surface layer member inserted to the injection molding mold and the female die;
(f) heating and melting the mixture obtained in the preceding step (b) containing the grained acrylic resin and reinforcing glass fibers and injecting the mixture into the cavity through the first nozzle;
(g) pressing the inner surface layer member firmly against the male die of the injection molding mold and remolding the inner surface layer member along the male die by softening the inner surface layer member by the injection temperature and injection secondary pressure of the thermoplastic resin and fully keeping the injection secondary pressure; and
(h) fusing the inner surface layer member obtained in the step (c) and the outer reinforcing shell layer obtained in the steps (e) and (f).

19. The process of Claim 18, wherein the acrylic resin sheet used in the step (c) is formed of poly(methyl methacrylate) and the thermoplastic resin to be used in the steps (e) and (f) is composed of ABS resin or AS resin which is or is not reinforced with glass fibers is preferred.

20. A process for recycling the synthetic resin molded article using the process of Claim 18, wherein the acrylic resin sheet used in the step (c) is formed of poly(methyl methacrylate) and the thermoplastic resin to be used in the steps (e) and (f) is composed of ABS resin or AS resin which is or is not reinforced with glass fibers is preferred.

21. The process of any one of Claims 19 or 20, wherein as the mixture of acrylic resin and thermoplastic resin including reinforced glass fiber, recycled material obtained from acrylic bathtub which is reinforced by thermosetting resin reinforced by glass fiber is used.

22. A synthetic resin molded article comprising:
an inner surface layer;
an outer reinforcing shell layer provided outside the inner surface layer, said outer reinforcing shell layer having a sandwich structure including skin layers and an intermediate layer;
wherein said inner surface layer is made of acrylic resin;
wherein said skin layers are made of glass fiber reinforced thermoplastic resin or non-reinforced thermoplastic resin;
wherein said intermediate layer is composed of acrylic resin obtained by graining an acrylic bathtub from which metal fittings have been removed and which is to be scrapped, and a thermoplastic resin containing glass fibers; and
wherein said synthetic resin molded article is bathtub.

23. A synthetic resin molded article comprising:
an inner surface layer;
an outer reinforcing shell layer provided outside the inner surface layer;
wherein said outer reinforcing shell layer having a two-layered structure comprising a first layer contacted with said inner surface layer made of acrylic resin, and an outermost second layer;
wherein said first layer is made of glass fiber reinforced thermoplastic resin or non-reinforced thermoplastic resin;
wherein said second layer
is composed of acrylic resin obtained by graining an acrylic bathtub from which metal fittings have been removed and which is to be scrapped, and a thermoplastic resin containing glass fibers; and
wherein said synthetic resin molded article is a bathtub.

24. The synthetic resin molded article of any one of Claims 22 and 23, wherein said intermediate layer of the outer reinforcing shell layer is composed of the recycled material obtained from acrylic bathtub which is reinforced by thermosetting resin reinforced by glass fiber, and ABS resin or AS resin.
